# EUROPEAN PATENT SPECIFICATION

(11) **EP 2 873 936 B1**
(45) Date of publication and mention of the grant of the patent: **17.07.2019**
(21) Application number: 14192481.1
(22) Date of filing: 10.11.2014
(51) Int. Cl.: F25B 49/02, F25B 13/00

(54) **Heat pump system**
Wärmepumpensystem
Système de pompe à chaleur

(30) Priority: 13.11.2013 JP 2013235261
(43) Date of publication of application: 20.05.2015
(73) Proprietor: MITSUBISHI HEAVY INDUSTRIES THERMAL SYSTEMS, LTD., Tokyo 108-8215 (JP)
(72) Inventor: Kanbara, Hiroshi, TOKYO, 108-8215 (JP); Nakanishi, Michiaki, TOKYO, 108-8215 (JP)
(74) Representative: Intès, Didier Gérard André

(56) References cited:
- EP-A1- 1 806 549
- EP-A1- 2 015 004
- EP-A1- 2 357 431
- WO-A1-2009/091397
- WO-A1-2013/006172
- WO-A1-2013/016404
- WO-A1-2013/160965
- WO-A1-2013/165841
- US-A1- 2002 174 665

## Description

### {Technical Field}

The present invention relates to a heat pump system that employs, as a refrigerant, R1234yf refrigerant (hydrofluoroolefin; hereinafter, also referred to simply as HFO refrigerant) having a low Global Warming Potential (GWP).

### {Background Art}

R1234yf refrigerant (HFO refrigerant) is known to be a low-GWP refrigerant whose Global Warming Potential (GWP) is lower than widely employed HFC refrigerants such as R410A refrigerant, R134a refrigerant, and so forth. However, because HFO refrigerant has low latent heat of evaporation, it is not possible to achieve a refrigeration capacity equivalent to that achieved with R410A refrigerant. Therefore, Patent Literature 1 provides an invention designed to achieve a capacity equivalent to a unit achieved by using R410A refrigerant even in the case in which HFO refrigerant is employed.

On the other hand, Patent Literature 2 provides an invention in which, in a heat pump system, a hot-gas bypass circuit that bypasses a portion of hot-gas refrigerant ejected from a compressor to an intake pipe at the compressor side relative to an accumulator so that it is possible to achieve, even during heating or during low load, a heating sensation equivalent to that achieved during high load, and in which it is made possible to achieve a comfortable heating sensation by keeping the temperature of the ejected refrigerant high during low load by closing a control valve provided in the hot-gas bypass circuit during high load and by opening the control valve during low load.

### {Citation List}

### {Patent Literature}

{PTL 1} Japanese Unexamined Patent Application, Publication No. 2011-2217
{PTL 2} Japanese Unexamined Patent Application, Publication No. 2004-61071
Besides, WO 2013/160965 discloses a heat pump system according to the preamble of claim 1.

### {Summary of Invention}

### {Technical Problem}

Because HFO refrigerant is a low-pressure refrigerant, the ejection temperature of the refrigerant is low, and the evaporation pressure thereof is decreased when the outdoor air temperature is low during heating, which may cause a low-pressure section to fall into a negative pressure state during the start-up of the compressor. It is generally not intended that air conditioners and refrigerators will be operated with negative pressure from the viewpoint of protecting the compressor. Therefore, low pressure is detected by incorporating a low-pressure protection device, and the compressor is stopped to protect it when the detected pressure becomes equal to or less than a set value. In addition, measures against negative pressure are employed, for example, suppressing the rate of increase of rotational speed of the compressor during the start-up of the compressor, and fully opening an expansion valve during the start-up until the low-pressure section becomes stable.

Because of this, when HFO refrigerant is employed, simply employing the above-described measures against negative pressure is not sufficient; in particular, in the case of small room air conditioners, pressure sensors are omitted in many cases to reduce costs, and thus, there is a demand for providing measures against negative pressure in a structure where no pressure sensor is employed. In other words, regardless of whether or not a pressure sensor is provided, a heat pump system employing HFO refrigerant, which is a low-GWP refrigerant, requires measures against negative pressure to achieve stable operation while protecting the compressor by reliably avoiding a situation in which a low-pressure section falls into a negative pressure state when the outdoor air temperature is low.

The present invention is made in light of the above-described circumstances, and an object thereof is to provide a heat pump system that employs HFO refrigerant and that is capable of stabilizing the heating operation by reliably avoiding a situation in which a low-pressure section falls into a negative pressure state even when the outdoor air temperature is low.

### {Solution to Problem}

In order to solve the above-described problems, a heat pump system is provided according to claim 1.

Specifically, a heat pump system according to the present invention is provided with a closed-cycle refrigeration cycle in which a compressor, an outdoor heat exchanger, an electric expansion valve, and an indoor heat exchanger are sequentially connected, and a controller that controls the refrigeration cycle, wherein the refrigeration cycle is filled with a HFO refrigerant, wherein the refrigeration cycle is provided with a hot-gas bypass circuit that bypasses a portion of a hot-gas refrigerant to an intake pipe of the compressor, the hot-gas bypass circuit is provided with a control valve and provided between an ejection pipe of the compressor and the intake pipe, wherein the controller has a function for, when starting heating operation, opening the control valve when a pressure in a low-pressure section is detected to be equal to or less than a set pressure or when a condition for making the pressure equal to or less than the set pressure is detected, and the controller has a function for closing the control valve when the pressure in the low-pressure section is detected to be stabilized at a pressure equal to or greater than the set pressure.

With the present invention, the refrigeration cycle is provided with, between the ejection pipe of the compressor and the intake pipe thereof, the hot-gas bypass circuit that bypasses a portion of the hot-gas refrigerant to the intake pipe and that is provided with the control valve, and, when starting heating operation, by means of the controller, the control valve is opened when the pressure in the low-pressure section is detected to be equal to or less than the set pressure or when the condition for making the pressure equal to or less than the set pressure is detected, and the control valve is closed when the pressure in the low-pressure section is detected to have stabilized at a pressure equal to or greater than the set pressure. Because of this, even when there is a risk of negative pressure occurring in the low-pressure section when starting the heating operation at a low outdoor air temperature, the pressure in the low-pressure section is directly or indirectly detected, the control valve in the hot-gas bypass circuit is opened when the pressure is equal to or less than the set pressure or when the condition for making the pressure equal to or less than the set pressure is satisfied, and the temperature and pressure of the intake refrigerant gas are increased by bypassing a portion of the hot-gas refrigerant ejected from the compressor to the intake pipe, thus increasing the temperature and pressure of the ejected refrigerant gas. Accordingly, it is possible to prevent the low-pressure section from falling into the negative pressure state by suppressing a pressure drop in the low-pressure section when starting heating operation. Therefore, it is possible to reduce the risk of compressor malfunctioning caused by the negative pressure in the low-pressure section, and it is also possible to enhance the heating performance by stabilizing the operation of the heat pump system employing HFO refrigerant.

Furthermore, with the heat pump system of the present invention, in the heat pump system described above, an accumulator is provided in the intake pipe of the refrigeration cycle, and the hot-gas bypass circuit is connected to the intake pipe between the accumulator and the compressor.

With the present invention, the accumulator is provided in the intake pipe in the refrigeration cycle, and the hot-gas bypass circuit is connected to the intake pipe between the accumulator and the compressor. Because of this, the refrigerant gas can be taken into the compressor while suppressing a decrease in the degree of superheating in the accumulator by bypassing the hot-gas refrigerant to be bypassed to the intake pipe via the hot-gas bypass circuit to the downstream side of the accumulator. Therefore, it is possible to effectively increase the temperature and pressure of the intake refrigerant gas, thus more quickly increasing the temperature and pressure of the ejected refrigerant gas, and it is possible to reliably prevent the low-pressure section from falling into the negative pressure state by effectively suppressing a pressure drop in the low-pressure section.

Furthermore, with the heat pump system of the present invention, in any one of the heat pump systems described above, the controller is configured to judge that a valve-opening condition for the control valve is satisfied and open the control valve when the pressure in the low-pressure section of the refrigeration cycle is equal to or less than the set pressure, when an outdoor air temperature is equal to or less than a set temperature, or when a difference between an ejected refrigerant temperature and the outdoor air temperature is equal to or less than a set temperature.

With the present invention, the controller is configured to judge that the valve-opening condition for the control valve is satisfied and open the control valve when the pressure in the low-pressure section in the refrigeration cycle is equal to or less than the set pressure, when the outdoor air temperature is equal to or less than the set temperature, or when the difference between the temperature of the ejected refrigerant and the outdoor air temperature is equal to or less than the set temperature. Because of this, whether there is a risk of negative pressure occurring in the low-pressure section is judged based on the detected value from the pressure sensor in the case in which the pressure sensor is provided, and based on the outdoor air temperature detected by the temperature sensor, based on the temperature difference between the temperature of the refrigerant ejected from the compressor and the outdoor air temperature, or the like, in the case in which the pressure sensor is not provided, thus allowing the control valve to be opened and the hot-gas refrigerant to be bypassed. Therefore, regardless of whether or not the pressure sensor is provided, it is possible to reduce the risk of the compressor malfunctioning by performing opening/closing control of the control valve so that negative pressure does not occur in the low-pressure section, and it is also possible to enhance the heating performance by stabilizing the operation of the heat pump system employing HFO refrigerant.

Furthermore, with the heat pump system of the present invention, in any one of the heat pump systems described above, the controller is configured to close the control valve when a state in which the low-pressure section satisfies a stabilizing condition and a state in which the compressor has reached a predetermined rotational speed are detected.

With the present invention, the controller is configured to close the control valve when the state in which the low-pressure section satisfies the stabilizing condition and the state in which the compressor has reached the predetermined rotational speed are detected. Because of this, the controller can judge that the low-pressure section has stabilized when the low-pressure section satisfies the stabilizing condition and the compressor has reached the predetermined rotational speed, the controller is also able to judge that the low-pressure section will not fall into the negative pressure state even if bypassing of the hot-gas refrigerant is stopped, and thus, the control valve can be closed. Therefore, it is possible to switch to the normal operation by confirming that there is no risk of negative pressure occurring in the low-pressure section, and it is possible to stabilize the heating operation of the heat pump system employing HFO refrigerant when the outdoor air temperature is low.

Furthermore, with the heat pump system of the present invention, in the heat pump system described above, the controller is configured to judge stabilization of the low-pressure section based on whether or not a state in which the low-pressure section is equal to or greater than the set pressure has continued for a set amount of time or whether or not a state in which a temperature difference between the outdoor air temperature and an outdoor heat exchanger temperature is equal to or less than a set value and in which a temperature difference between the ejection temperature of the compressor and an indoor heat exchanger temperature is equal to or greater than a set value has continued for a set amount of time.

With the present invention, the controller is configured to judge the stabilization of the low-pressure section based on whether or not a state in which the low-pressure section is equal to or greater than the set pressure has continued for the set amount of time or whether or not a state in which the temperature difference between the outdoor air temperature and the outdoor heat exchanger temperature is equal to or less than the set value and in which the temperature difference between the ejection temperature of the compressor and the indoor heat exchanger temperature is equal to or greater than the set value has continued for the set amount of time. Because of this, in general, it may be concluded that the low-pressure section has stabilized when the state in which the pressure in the low-pressure section is equal to or greater than the set pressure has continued for the set amount of time, or when the state in which the temperature difference between the outdoor air temperature and the outdoor heat exchanger temperature is equal to or less than the set value and the temperature difference between the ejection temperature of the compressor and the indoor heat exchanger temperature is equal to or greater than the set value has continued for the set amount of time. Accordingly, the controller can judge that the low-pressure section will not fall into the negative pressure state, and thus, the control valve can be closed. Therefore, regardless of whether or not the pressure sensor is provided, it is possible to stabilize the heating operation by reliably confirming the stabilization of the pressure in the low-pressure section and by switching the heat pump system to the normal operation.

Furthermore, with the heat pump system of the present invention, in any one of the heat pump systems described above, the controller is configured to judge whether or not a defrosting prohibited time has passed after the control valve is opened, close the control valve if the defrosting prohibited time has passed, judge whether or not a condition for closing the control valve is satisfied if the defrosting prohibited time has not passed, and close the control valve if the condition is satisfied.

With the present invention, the controller is configured to judge whether or not the defrosting prohibited time has passed after opening the control valve and close the control valve if the defrosting prohibited time has passed, and judge whether or not the condition for closing the control valve is satisfied if the defrosting prohibited time has not passed and close the control valve if the condition is satisfied. Because of this, when it is judged that the defrosting prohibited time has passed after opening the control valve, it is concluded that a pressure drop in the low-pressure section is due to frost formation at the outdoor heat exchanger, and it is possible to give a higher priority to a defrosting operation by closing the control valve, whereas when the defrosting prohibited time has not passed, it is judged that a pressure drop in the low-pressure section is caused by starting the heating operation at a low outdoor air temperature, and it is possible to prevent the low-pressure section from falling into the negative pressure state by keeping the control valve in an open state by continuing the bypass operation of the hot-gas refrigerant until the valve-closing condition is satisfied. Therefore, it is possible to appropriately perform a low-pressure protection operation by bypassing the hot-gas refrigerant during the defrosting prohibited time when starting the heating operation.

In addition, with the heat pump system of the present invention, in any one of the heat pump systems described above, the controller is configured so that, when starting heating operation, the control valve is opened when the condition for making the pressure in the low-pressure section equal to or less than the set pressure is detected, the rotational speed of the compressor is increased in a step-wise manner with a speed increment, which is set in accordance with the outdoor air temperature, to a required rotational speed, operation of the compressor is started with the electric expansion valve fully opened, fully-open control of the electric expansion valve is canceled and switched to a normal control when the rotational speed of the compressor has reached a required rotational speed, and, subsequently, the control valve is closed when a predetermined amount of time has passed.

With the present invention, the controller is configured so that, when starting heating operation, the control valve is opened when the condition for making the low-pressure section equal to or less than the set pressure is detected, the rotational speed of the compressor is increased step-wise manner with a speed increment, which is set in accordance with the outdoor air temperature, to a required rotational speed at a rotational speed set in accordance with the outdoor air temperature, the operation thereof is started with the electric expansion valve fully opened, the fully-open control of the electric expansion valve is canceled and switched to the normal control when the rotational speed of the compressor has reached the required rotational speed, and, subsequently, the control valve is closed when the predetermined amount of time has passed. Because of this, after the operation is started with the control valve in the hot-gas bypass circuit opened, when the rotational speed of the compressor reaches the required rotational speed and the fully-open control of the electric expansion valve is canceled, and then the predetermined amount of time has passed, the controller judges that the condition for closing the control valve is satisfied, that the pressure in the low-pressure section has stabilized, and that the negative pressure will not occur in the low-pressure section even if bypassing of the hot-gas refrigerant is stopped, and thus the control valve is closed. By doing so, it is possible to restore the normal operation by confirming that there is no risk of negative pressure occurring in the low-pressure section, and it is possible to stabilize the heating operation of the heat pump system employing HFO refrigerant when the outdoor air temperature is low. Moreover, in this case, because it is possible to control the control valve so that negative pressure does not occur in the low-pressure section by appropriately judging the open/close timing of the control valve based on the rotational speed of the compressor and the open/close timing of the electric expansion valve, it is possible to effectively apply the negative pressure preventing to a heat pump system that is not provided with the pressure sensor.

### {Advantageous Effects of Invention}

With the present invention, even when there is a risk of negative pressure occurring in the low-pressure section when starting the heating operation at a low outdoor air temperature, the pressure in the low-pressure section is directly or indirectly detected, the control valve in the hot-gas bypass circuit is opened when the pressure in the low-pressure section is equal to or less than the set pressure or when the condition for making the pressure equal to or less than the set pressure is satisfied, and the temperature and pressure of the intake refrigerant gas are increased by bypassing a portion of the hot-gas refrigerant ejected from the compressor to the intake pipe, thus increasing the temperature and pressure of the ejected refrigerant gas, which makes it possible to prevent the low-pressure section from falling into the negative pressure state by suppressing a decrease in low pressure when starting the heating operation. Accordingly, it is possible to reduce the risk of compressor malfunctioning caused by the negative pressure of the low-pressure section, and it is also possible to enhance the heating performance by stabilizing the operation of the heat pump system employing HFO refrigerant.

### {Brief Description of Drawings}

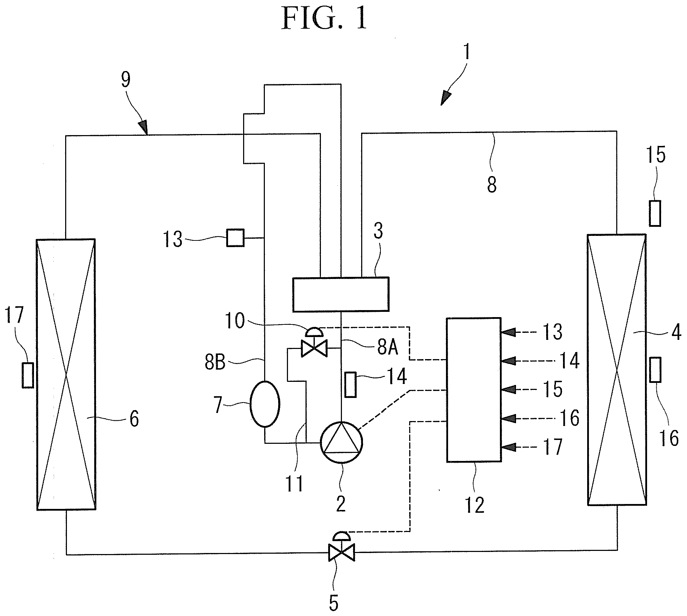

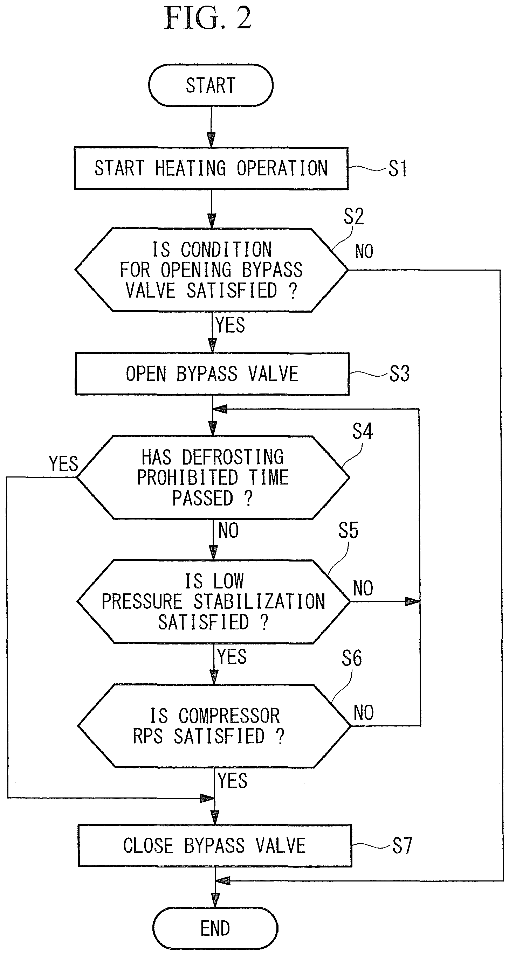

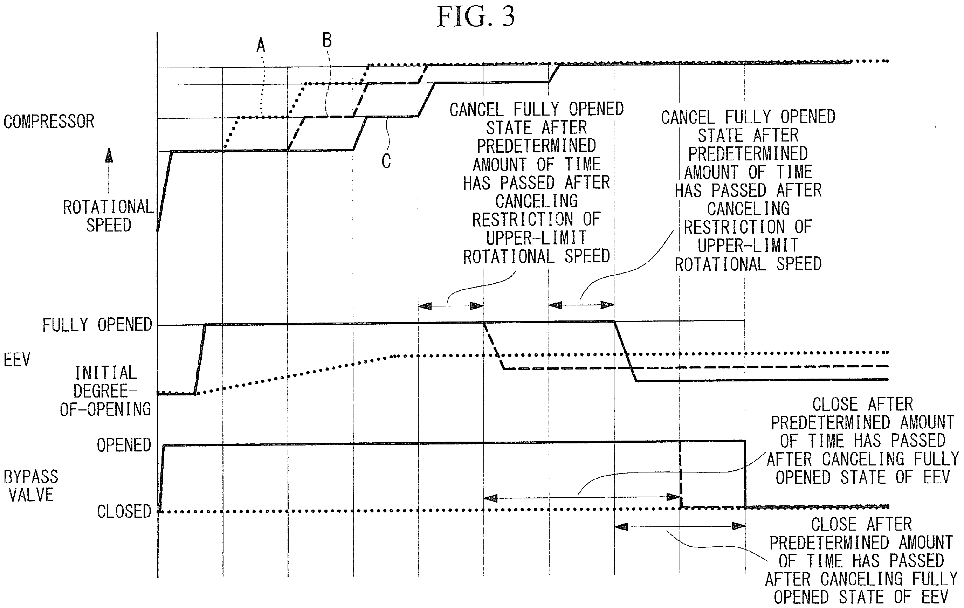

{Fig. 1} Fig. 1 is a diagram showing a refrigeration cycle in a heat pump system according to a first embodiment of the present invention.
{Fig. 2} Fig. 2 is a diagram showing a control flowchart for a control valve performed by a controller of the above-described heat pump system.
{Fig. 3} Fig. 3 is a diagram showing a timing chart for another control for the control valve performed by the controller of the above-described heat pump system.

### {Description of Embodiments}

Embodiments according to the present invention will be described below with reference to the drawings.

### {First Embodiment}

A first embodiment of the present invention will be described below with reference to Figs. 1 and 2.

Fig. 1 shows a refrigeration cycle in a heat pump system of this embodiment, and Fig. 2 shows a control flowchart for a control valve performed by a controller of the heat pump system.

In the heat pump system 1, a closed-cycle refrigeration cycle 9 is formed by sequentially connecting, via refrigerant pipes 8, a compressor 2 that compresses a refrigerant, a four-way switching valve 3 that switches directions to which the refrigerant ejected from the compressor 2 is circulated, an outdoor heat exchanger 4 that performs heat exchange between the refrigerant and the outdoor air, an electric expansion valve (EEV) 5 that decreases the pressure of the high-pressure liquid refrigerant, an indoor heat exchanger 6 that performs heat exchange between the refrigerant and the indoor air, and an accumulator 7 that separates liquid contained in the refrigerant which is to be taken into the compressor 2.

This refrigeration cycle 9 itself is a known refrigeration cycle, and this refrigeration cycle 9 is filled with R1234yf refrigerant (HFO refrigerant), which is a low-GWP refrigerant. In addition, a hot-gas bypass circuit 11 provided with a control valve (bypass valve) 10 is connected between an ejection pipe 8A of the compressor 2 and an intake pipe 8B thereof, and the hot-gas bypass circuit 11 is configured so that a portion of the hot-gas refrigerant ejected from the compressor 2 can be bypassed to the intake pipe 8B by opening the control valve (bypass valve) 10. This hot-gas bypass circuit 11 is connected to the intake pipe 8B between the accumulator 7 provided in the intake pipe 8B and the compressor 2.

Opening/closing control of the above-described control valve (bypass valve) 10 is performed by a controller 12. Detected values from a pressure sensor 13 that detects the pressure of the low-pressure section, an ejection temperature sensor 14 that detects the temperature of the ejected refrigerant, an outdoor temperature sensor 15 that detects the outdoor air temperature, an outdoor-heat-exchanger temperature sensor 16 that detects the temperature of the outdoor heat exchanger 4, an indoor-heat-exchanger temperature sensor 17 that detects the temperature of the indoor heat exchanger 6, and so forth are input to the controller 12.

Note that, with the heat pump system 1 provided with the pressure sensor 13, it is possible to perform opening/closing control of the control valve 10 by directly detecting the pressure in the low-pressure section by using the detected value from the pressure sensor 13, as described later. On the other hand, there are many heat pump systems 1 that are not provided with the pressure sensor 13, such as small room air conditioners or the like, and, because it is not possible to directly detect low pressure in those cases, opening/closing control of the control valve 10 is performed by indirectly detecting the pressure in the low-pressure section by using the detected value from the above-described temperature sensors, as described later.

In the case of the heat pump system 1 employing HFO refrigerant, because the low pressure section may become negative pressure, especially when starting heating (during start-up operation) and when the outdoor air temperature is low, the controller 12 is provided with a control function for monitoring a low pressure and performing opening/closing control of the control valve (bypass valve) 10, as shown in Fig. 2, so that the low pressure section does not fall into a negative pressure state.

The control function of the controller 12 for the control valve (bypass valve) 10 will be described below in detail based on the flowchart shown in Fig. 2.

Once the heating operation is started in Step S1, the process proceeds to Step S2, where it is judged whether or not valve-opening conditions for the control valve (bypass valve) 10 are satisfied. This judgment is made based on whether or not the following conditions are satisfied.
(1) In the case in which the pressure sensor 13 is provided, the pressure detected by the pressure sensor 13 is equal to or less than a set pressure.
(2) In the case in which the pressure sensor 13 is not provided, the temperature detected by the outdoor temperature sensor 15 is equal to or less than a set temperature, or a difference between the temperature detected by the ejection temperature sensor 14 and that detected by the outdoor temperature sensor 15 is equal to or less than a set temperature, and therefore there is a risk that the low pressure section falling into the negative pressure state.

When the judgment in Step S2 results in "NO", it is judged that there is no risk of negative pressure occurring in the low-pressure section, and thus, the control process proceeds to END. On the other hand, when the judgment results in "YES", the process proceeds to Step S3, the control valve (bypass valve) 10 is opened, and the process proceeds to the subsequent Step S4. In Step S4, it is judged whether or not a defrosting prohibited time has passed. The defrosting prohibited time is for prohibiting a defrosting operation for a certain amount of time from the start of the heating operation when performing the heating operation using a heat pump. After this prohibited time has passed, a pressure drop in the low-pressure section can be assumed to be a result of frost formation at the outdoor heat exchanger 4. Therefore, when the judgment in Step S4 results in "YES", the process proceeds to Step S7, where the control valve (bypass valve) 10 is closed so as to give a higher priority to the defrosting operation.

When the judgment in Step S4 results in "NO", that is, when it is judged that the defrosting prohibited time has not passed, the control valve (bypass valve) 10 is kept in the open state so that negative pressure does not occur in the low-pressure section, a portion of the hot-gas refrigerant ejected from the compressor 2 is bypassed to the intake pipe 8B at the downstream side of the accumulator 7 via the hot-gas bypass circuit 11, and thus, the temperature and pressure of the refrigerant gas which is to be taken into the compressor 2 are increased.

In addition, when the judgment in Step S4 results in "NO", the process proceeds to Step S5, where it is judged whether or not the low-pressure section is stabilized at a pressure equal to or greater than the set pressure. This judgment is made based on whether or not the following conditions are satisfied.
(3) In the case in which the pressure sensor 13 is provided, a state in which a detected pressure is equal to or greater than the set pressure continues for a set amount of time.
(4) In the case in which the pressure sensor 13 is not provided, a state in which a difference between the temperature detected by the outdoor temperature sensor 15 and that detected by the outdoor-heat-exchanger temperature sensor 16 is equal to or less than a set temperature and in which a difference between the temperature detected by the ejection temperature sensor 14 and that detected by the indoor-heat-exchanger temperature sensor 17 is equal to or greater than a set temperature continues for a set amount of time.
   When the judgment in the above-described Step S5 results in "NO", the process returns to Step S4, and when the judgment results in "YES", the process proceeds to Step S6, where it is judged whether or not the following conditions are satisfied.
(5) The rotational speed (rps) of the compressor 2 has reached a required rotational speed or protective start-up control has been completed.

When the judgment here results in "NO", the process returns to Step S4. When the judgment results in "YES", it is judged that there is no risk of negative pressure occurring in the low-pressure section even if the control valve (bypass valve) 10 is closed, thus moving on to Step S7, where the control valve (bypass valve) 10 is closed, and the control process proceeds to END.

With the configuration described above, this embodiment affords the effects described below.

With the heat pump system 1, by making the high-temperature, high-pressure refrigerant ejected from the compressor 2 flow toward the outdoor heat exchanger 4 by using the four-way switching valve 3, it is possible to perform a cooling operation by making the outdoor heat exchanger 4 serve as a condenser and the indoor heat exchanger 6 serve as an evaporator, and, by making the refrigerant ejected from the compressor 2 flow toward the indoor heat exchanger 6 by using the four-way switching valve 3, it is also possible to perform a heating operation by making the indoor heat exchanger 6 serve as a condenser and the outdoor heat exchanger 4 serve as an evaporator.

During this heating operation, especially during the start-up operation and when the outdoor air temperature is low, the low-pressure section sometimes drops to a negative pressure state, and this occurs more frequently in the case of HFO refrigerant, which is a low-GWP refrigerant, because it is a low-pressure refrigerant. With the operation performed while the low-pressure section is in the negative pressure state, because there is a high risk of the compressor 2 malfunctioning, which may damage the compressor 2, measures against negative pressure are necessary. In this embodiment, the control valve (bypass valve) 10 provided in the hot-gas bypass circuit 11 is opened when the pressure detected by the pressure sensor 13 is equal to or less than the set pressure, or in the case in which the pressure sensor 13 is not provided, when the temperature detected by the outdoor temperature sensor 15 is equal to or less than the set temperature or when the difference between the temperature of the refrigerant detected by the ejection temperature sensor 14 and the temperature detected by the outdoor temperature sensor 15 is equal to or less than the set temperature, and therefore there is a risk that the low pressure section falls into the negative pressure state.

As has been described above, with this embodiment, a portion of the high-temperature, high-pressure hot-gas refrigerant ejected from the compressor 2 can be bypassed to the intake pipe 8B at the downstream side of the accumulator 7, and the temperature and pressure of the low-pressure refrigerant gas which is to be taken into the compressor 2 can be increased before the refrigerant gas is taken into the compressor 2. Accordingly, it is possible to suppress a pressure drop in the low-pressure section by quickly increasing the temperature and pressure of the high-pressure refrigerant gas ejected from the compressor 2.

Therefore, even when there is a risk of negative pressure occurring in the low-pressure section when starting heating operation at a low outdoor air temperature, the pressure in the low-pressure section is directly or indirectly detected, and the control valve (bypass valve) 10 in the hot-gas bypass circuit 11 is opened when the detected pressure is equal to or less than the set pressure or when conditions which makes the pressure equal to or less than the set pressure are satisfied. By doing so, the temperature and pressure of the intake refrigerant gas are increased by bypassing a portion of the hot-gas refrigerant ejected from the compressor 2 to the intake pipe 8B, which increases the temperature and pressure of the ejected refrigerant gas, thus making it possible to prevent the low-pressure section from falling into the negative pressure state by suppressing a pressure drop in the low-pressure section when starting heating operation. Accordingly, it is possible to reduce the risk of the compressor 2 malfunctioning, and it is also possible to stabilize the operation of the heat pump system 1 employing HFO refrigerant, thus enhancing the heating performance.

In particular, because the hot-gas bypass circuit 11 is connected between the accumulator 7 in the intake pipe 8B and the compressor 2, the hot-gas refrigerant that is bypassed to the intake pipe 8B via the hot-gas bypass circuit 11 is bypassed to the intake pipe 8B at the downstream side of the accumulator 7. Because of this, the refrigerant gas can be taken into the compressor 2 while suppressing a decrease in the degree of superheating in the accumulator 7. By doing so, it is possible to effectively increase the temperature and pressure of the intake refrigerant gas, thus more quickly increasing the temperature and pressure of the ejected refrigerant gas, and it is possible to reliably prevent the low-pressure section from falling into the negative pressure state by effectively suppressing a pressure drop in the low-pressure section.

In addition, with this embodiment, the controller 12 judges that the valve-opening conditions for the control valve (bypass valve) 10 are satisfied and opens the control valve 10 when the pressure in the low-pressure section in the refrigeration cycle 9 is equal to or less than the set pressure, or when the outdoor air temperature is equal to or less than the set temperature or the difference between the temperature of the refrigerant ejected from the compressor 2 and the outdoor air temperature is equal to or less than the set temperature, and therefore there is a risk of the pressure in the low-pressure section becoming equal to or less than the set pressure. It is concluded that there is a risk of negative pressure occurring in the low-pressure section based on the pressure in the low-pressure section detected by the pressure sensor 13 in the case in which the pressure sensor 13 is provided, or based on the outdoor air temperature detected by the outdoor temperature sensors 15 or the temperature difference between the ejected refrigerant temperature detected by the ejection temperature sensor 14 and the outdoor air temperature detected by the outdoor temperature sensor 15 in the case in which the pressure sensor 13 is not provided, and thus, the control valve (bypass valve) 10 is opened so as to bypass the hot-gas refrigerant.

Because of this, regardless of whether or not the heat pump system 1 is provided with the pressure sensor 13, it is possible to reduce the risk of the compressor 2 malfunctioning by preventing the low-pressure section from falling into the negative pressure state, and it is also possible to enhance the heating performance by stabilizing the operation of the heat pump system 1 employing HFO refrigerant.

Furthermore, the controller 12 is configured so as to close the control valve (bypass valve) 10, when the situation in which the state of low-pressure section satisfies stabilizing conditions and in which the compressor 2 has reached a predetermined rotational speed is detected. The low-pressure section may be considered to be stabilized when the stabilizing conditions are satisfied and the compressor 2 has reached a predetermined rotational speed. By doing so, it can be concluded that the low-pressure section will not fall into the negative pressure state even if bypassing of the hot-gas refrigerant is stopped, and thus, the control valve 10 can be closed. Therefore, it is possible to switch to the normal operation by confirming that there is no risk of negative pressure occurring in the low-pressure section, and it is possible to stabilize the heating operation of the heat pump system 1 employing the HFO refrigerant when the outdoor air temperature is low.

In addition, the controller 12 is configured so as to judge the stabilization of the low-pressure section based on whether or not a state in which the low-pressure section is equal to or greater than the set pressure has continued for a set amount of time or whether or not a state in which the temperature difference between the outdoor air temperature and the outdoor heat exchanger temperature is equal to or less than the set value and the temperature difference between the ejection temperature of the compressor 2 and the indoor heat exchanger temperature is equal to or greater than the set value has continued for a set amount of time. In general, it may be concluded that the pressure in the low-pressure section has stabilized when the state in which the pressure in the low-pressure section is equal to or greater than the set pressure has continued for a set amount of time, or when the state in which the temperature difference between the outdoor air temperature and outdoor heat exchanger temperature is equal to or less than the set value and the temperature difference between the ejection temperature of the compressor 2 and the indoor heat exchanger temperature is equal to or greater than the set value has continued for a set amount of time.

Based on these situations, the controller judges that the low-pressure section will not fall into the negative pressure state even if bypassing of the hot-gas refrigerant is stopped and close the control valve (bypass valve) 10. Accordingly, regardless of whether or not the pressure sensor 13 is provided, it is possible to switch the heat pump system 1 to the normal operation by reliably confirming the stabilization of the pressure in the low-pressure section, and thus, it is possible to stabilize the heating operation.

Furthermore, in this embodiment, after opening the control valve (bypass valve) 10, the controller 12 judges whether or not the defrosting prohibited time has passed. The controller 12 is configured so as to close the control valve 10 if the defrosting prohibited time has passed, to judge whether or not the conditions for closing the control valve 10 are satisfied if the prohibited time has not passed, and to close the control valve 10 if the conditions are satisfied. Because of this, when it is judged that the defrosting prohibited time has passed after the control valve 10 is opened, the controller judges that a pressure drop in the low-pressure section is due to frost formation at the outdoor heat exchanger 4, and thus, it is possible to give a higher priority to the defrosting operation by closing the control valve 10.

On the other hand, in the case in which the defrosting prohibited time has not passed, the controller judges that the pressure drop in the low-pressure section is caused by starting heating operation at a low outdoor air temperature, and it is possible to prevent the low-pressure section from falling into the negative pressure state by keeping the control valve 10 in an open state, by continuing the bypass operation of the hot-gas refrigerant until the valve-closing conditions are satisfied. Therefore, it is possible to appropriately perform a low-pressure protection operation by bypassing the hot-gas refrigerant during the defrosting prohibited time when starting the heating operation.

Note that, with this embodiment, the above-described hot-gas bypass control may be employed in combination with another measure against negative pressure in which, when starting the heating operation, the starting operation of the compressor 2 is performed in accordance with the outdoor air temperature so that the rotational speed thereof is increased to the required rotational speed so that the lower the outdoor temperature becomes, the more mildly the rotational speed is increased, the compressor 2 is also started up with the electric expansion valve 5 fully opened during this time, and the electric expansion valve 5 is switched to a normal open loop control (control in which the degree-of-opening is made proportional to the rotational speed of the compressor) after the rotational speed of the compressor 2 has reached the upper-limit rotational speed, and thus, it is possible to make the measures against the negative pressure more effective.

### {Second Embodiment}

Next, a second embodiment of the present invention will be described with reference to Fig. 3.

This embodiment differs from the above-described first embodiment in terms of the opening/closing control algorithm for the control valve 10. Because the other features are the same as those of the first embodiment, descriptions thereof will be omitted.

This embodiment is effective when applied, in particular, to the heat pump system 1 that is not provided with the pressure sensor 13, and the low-pressure section is prevented from falling into the negative pressure state by performing opening/closing control of the control valve (bypass valve) 10 by means of the controller 12, based on the detected value of the outdoor air temperature, the rotational speed of the compressor 2 when starting the heating operation (during start-up operation), and the degree-of-opening of the electric expansion valve (EEV) 5.

In this control, start-up patterns of the compressor 2 when starting the heating operation (during start-up operation) are divided into a plurality of patterns in accordance with the detected values from the outdoor temperature sensor 15. For example, as shown in Fig. 3, a case in which the outdoor air temperature is equal to or greater than 0 °C is pattern A, a case in which the outdoor air temperature is 0 °C to -B °C is pattern B, a case in which the outdoor air temperature is equal to or less than -B °C is pattern C, and so forth. Then, in this control, the rotational speed of the compressor 2 is increased to a maximum rotational speed so that the lower the outdoor temperature is, the longer the amount of time for restricting the upper-limit rotational speed becomes, and the compressor 2 is also started up with the electric expansion valve (EEV) 5 fully opened and the control valve (bypass valve) 10 of the hot-gas bypass circuit 11 opened.

Then, after starting up the compressor as described above, when the rotational speed of the compressor 2 reaches a condition for canceling the restriction on the upper-limit rotational speed and when the restriction on the upper-limit rotational speed is canceled, and after a predetermined amount of time has passed therefrom, the fully open state of the electric expansion valve (EEV) 5 is canceled, and the degree-of-opening thereof is switched to a normal degree-of-opening control, for example, the open loop control in which the degree-of-opening is controlled so as to be proportional to the rotational speed of the compressor. This control is performed so that, when a predetermined amount of time has further passed therefrom, at a point in time when it is concluded that the low-pressure section will not fall into the negative pressure state, the control valve (bypass valve) 10 is closed, thus switching to the normal operation.

As described above, once the predetermined amount of time has passed after the compressor 2 has reached a required condition related to the upper-limit rotational speed and after the restriction is canceled, by means of the controller 12, the fully-open control of the electric expansion valve (EEV) 5 is canceled, and the control is switched to the normal degree-of-opening control. Furthermore, once the fully-open control of the electric expansion valve 5 is canceled, and the predetermined amount of time has passed, the controller judges that the pressure in the low-pressure section has stabilized, that is, the low pressure will not become negative pressure even if bypassing of the hot-gas refrigerant is stopped, and it is judged that the conditions for closing the control valve 10 are satisfied, and the controller closes the control valve (bypass valve) 10.

As described above, with this embodiment, it is possible to reduce the risk of the compressor 2 malfunctioning by performing the opening/closing control of the control valve 10 so that the low-pressure section does not fall into the negative pressure state, and it is also possible to enhance the heating performance by stabilizing the operation of the heat pump system employing HFO refrigerant. In particular, in this embodiment, the open/close timing of the control valve 10 is appropriately controlled based on the outdoor air temperature when starting the heating operation (during start-up operation), the restriction on the rotational speed of the compressor 2 according to the outdoor air temperature, and the degree-of-opening control of the electric expansion valve (EEV) 5, so that negative pressure does not occur in the low-pressure section, and this embodiment can effectively be applied to the heat pump system 1 that is not provided with the pressure sensor 13.

Note that, the present invention is not limited to the embodiments described above, and appropriate modifications are possible within a range that does not depart from the scope thereof. For example, in the above-described embodiments, a single-unit heat pump systems 1 in which one indoor heat exchanger 6 is connected have been described. However, it is needless to say that the present invention can similarly be applied to multiple-unit heat pump systems in which a plurality of indoor heat exchangers 6 are connected. In addition, it is naturally possible to widely apply the present invention to systems other than air conditioners, such as heat-pump hot-water supply units, heat-pump vehicle air conditioners, or the like that employ HFO refrigerant.

### {Reference Signs List}

- 1: heat pump system
- 2: compressor
- 4: outdoor heat exchanger
- 5: electric expansion valve (EEV)
- 6: indoor heat exchanger
- 7: accumulator
- 8A: ejection pipe
- 8B: intake pipe
- 9: refrigeration cycle
- 10: control valve (bypass valve)
- 11: hot-gas bypass circuit
- 12: controller
- 13: pressure sensor
- 14: ejection temperature sensor
- 15: outdoor temperature sensor
- 16: outdoor-heat-exchanger temperature sensor
- 17: indoor-heat-exchanger temperature sensor

## Claims

1. A heat pump system (1) comprising:
a closed-cycle refrigeration cycle (9) in which a compressor (2), an outdoor heat exchanger (4), an electric expansion valve (5), and an indoor heat exchanger (6) are sequentially connected; and
a controller (12) that controls the refrigeration cycle (9),
wherein the refrigeration cycle (9) is filled with a HFO refrigerant,
wherein the refrigeration cycle (9) is provided with a hot-gas bypass circuit (11) that bypasses a portion of a hot-gas refrigerant to an intake pipe (8B) of the compressor (2), the hot-gas bypass circuit (11) is provided with a control valve (10) and provided between an ejection pipe (8A) of the compressor (2) and the intake pipe (8B),
**characterized in that** the hot-gas bypass circuit (11) is configured to bypass said portion of said high-temperature, high-pressure hot-gas refrigerant ejected from the compressor (2) to the intake-pipe (8B), so as to increase the temperature and pressure of the low-pressure refrigerant gas which is to be taken into the compressor,
and **in that** the controller (12) has a function for, when starting heating operation, opening the control valve (10) when a pressure in a low-pressure section is detected to be equal to or less than a set pressure or when a condition for making the pressure equal to or less than the set pressure is detected, and the controller (12) has a function for closing the control valve (10) when the pressure in the low-pressure section is detected to be stabilized at a pressure equal to or greater than the set pressure.

2. The heat pump system (1) according to Claim 1, wherein an accumulator (7) is provided in the intake pipe (8B) of the refrigeration cycle (9), and the hot-gas bypass circuit (11) is connected to the intake pipe (8B) between the accumulator (7) and the compressor (2).

3. The heat pump system (1) according to Claim 1 or 2, wherein the controller (12) is configured to judge that a valve-opening condition for the control valve (10) is satisfied and open the control valve (10) when the pressure in the low-pressure section of the refrigeration cycle (9) is equal to or less than the set pressure, when an outdoor air temperature is equal to or less than a set temperature, or when a difference between an ejected refrigerant temperature and the outdoor air temperature is equal to or less than a set temperature.

4. The heat pump system (1) according to any one of Claims 1 to 3, wherein the controller (12) is configured to close the control valve (10) when a state in which the low-pressure section satisfies a stabilizing condition and a state in which the compressor (2) has reached a predetermined rotational speed are detected.

5. The heat pump system (1) according to Claim 4, wherein the controller (12) is configured to judge stabilization of the low-pressure section based on whether or not a state in which the low-pressure section is equal to or greater than the set pressure has continued for a set amount of time or whether or not a state in which a temperature difference between the outdoor air temperature and an outdoor heat exchanger temperature is equal to or less than a set value and in which a temperature difference between the ejection temperature of the compressor (2) and an indoor heat exchanger temperature is equal to or greater than a set value has continued for a set amount of time.

6. The heat pump system (1) according to any one of Claims 1 to 5, wherein the controller (12) is configured to judge whether or not a defrosting prohibited time has passed after the control valve (10) is opened, close the control valve (10) if the defrosting prohibited time has passed, judge whether or not a condition for closing the control valve (10) is satisfied if the defrosting prohibited time has not passed, and close the control valve (10) if the condition is satisfied.

7. The heat pump system (1) according to Claim 1 or 2, wherein the controller (12) is configured so that, when starting heating operation, the control valve (10) is opened when the condition for making the pressure in the low-pressure section equal to or less than the set pressure is detected, the rotational speed of the compressor (2) is increased in a step-wise manner with a speed increment, which is set in accordance with the outdoor air temperature, to a required rotational speed, operation of the compressor (2) is started with the electric expansion valve (5) fully opened, fully-open control of the electric expansion valve (5) is canceled and switched to a normal control when the rotational speed of the compressor (2) has reached a required rotational speed, and, subsequently, the control valve (10) is closed when a predetermined amount of time has passed.

## Patentansprüche

1. Wärmepumpensystem (1) aufweisend:
einen geschlossenen Kältemittelkreislauf (9), in dem ein Verdichter (2), ein Außenwärmetauscher (4), ein elektrisches Expansionsventil (5) und ein Innenwärmetauscher (6) sequentiell verbunden sind; und
eine Steuerung (12), die den Kältemittelkreislauf (9) steuert,
wobei der Kältemittelkreislauf (9) mit einem HFO-Kältemittel gefüllt ist,
wobei der Kältemittelkreislauf (9) mit einem Heißgas-Bypass-Kreis (11) versehen ist, der einen Teil eines Heißgaskältemittels zu einem Einlassrohr (8B) des Verdichters (2) umgeht, der Heißgas-Bypass-Kreis (11) mit einem Steuerventil (10) versehen ist und zwischen einem Auslassrohr (8A) des Verdichters (2) und dem Einlassrohr (8B) bereitgestellt ist,
**dadurch gekennzeichnet, dass** der Heißgas-Bypass-Kreis (11) so konfiguriert ist, dass er den vom Verdichter (2) an das Einlassrohr (8B) ausgelassenen Teil des Hochtemperatur-Hochdruck-Heißgaskältemittels umgeht, um dadurch die Temperatur und den Druck des in den Verdichter einzuleitenden Niederdruck-Kältemittelgases zu erhöhen,
und dadurch, dass die Steuerung (12) eine Funktion umfasst, um, wenn der Heizbetrieb gestartet wird, das Steuerventil (10) zu öffnen, wenn ein Druck im Niederdruckabschnitt erfasst wird, der gleich hoch wie oder niedriger als ein eingestellter Druck ist, oder wenn die Bedingung zum Bewirken des gleich hohen Drucks wie oder niedrigeren Drucks als den eingestellten Druck erfasst wird, und die Steuerung (12) eine Funktion umfasst, um das Steuerventil (10) zu schließen, wenn erfasst wird, dass der Druck im Niederdruckabschnitt auf einen Druck stabilisiert ist, der gleich hoch wie oder höher als der eingestellte Druck ist.

2. Wärmepumpensystem (1) nach Anspruch 1, wobei ein Speicher (7) im Einlassrohr (8B) des Kältemittelkreislaufs (9) vorgesehen ist, und der Heißgas-Bypass-Kreis (11) zwischen dem Speicher (7) und dem Verdichter (2) mit dem Einlassrohr (8B) verbunden ist.

3. Wärmepumpensystem (1) nach Anspruch 1 oder 2, wobei die Steuerung (12) konfiguriert ist zum Beurteilen, dass eine Ventilöffnungsbedingung für das Steuerventil (10) erfüllt ist, und das Steuerventil (10) zu öffnen, wenn der Druck im Niederdruckabschnitt des Kältemittelkreislaufs (9) gleich hoch wie oder niedriger als der eingestellte Druck ist, wenn eine Außenlufttemperatur gleich hoch wie oder niedriger als eine eingestellte Temperatur ist, oder wenn eine Differenz zwischen einer ausgelassenen Kältemitteltemperatur und der Außenlufttemperatur gleich hoch wie oder niedriger als eine eingestellte Temperatur ist.

4. Wärmepumpensystem (1) nach einem der Ansprüche 1 bis 3, wobei die Steuerung (12) konfiguriert ist zum Schließen des Steuerventils (10), wenn ein Zustand, in dem der Niederdruckabschnitt eine Stabilisierungsbedingung erfüllt, und ein Zustand, in dem der Verdichter (2) eine im Voraus bestimmte Drehzahl erreicht hat, erfasst werden.

5. Wärmepumpensystem (1) nach Anspruch 4, wobei die Steuerung (12) konfiguriert ist zum Beurteilen der Stabilisierung des Niederdruckabschnitts abhängig davon, ob ein Zustand, in dem der Niederdruckabschnitt gleich groß wie oder größer als der eingestellte Druck ist, während einer eingestellten Zeitdauer angedauert hat oder nicht, oder ob ein Zustand, in dem eine Temperaturdifferenz zwischen der Außenlufttemperatur und einer Außenwärmetauschertemperatur gleich groß wie oder niedriger als ein eingestellter Wert ist, und in dem eine Temperaturdifferenz zwischen der Auslasstemperatur des Verdichters (2) und der Temperatur eines Innenwärmetauschers gleich groß wie oder größer als ein eingestellter Wert ist, während einer eingestellten Zeitdauer angedauert hat oder nicht.

6. Wärmepumpensystem (1) nach einem der Ansprüche 1 bis 5, wobei die Steuerung (12) konfiguriert ist zum Beurteilen, ob eine Abtauverbotszeit nach dem Öffnen des Steuerventils (10) verstrichen ist oder nicht, zum Schließen des Steuerventils (10), wenn die Abtauverbotszeit verstrichen ist, zum Beurteilen, ob eine Bedingung zum Schließen des Steuerventils (10) erfüllt ist oder nicht, wenn die Abtauverbotszeit nicht verstrichen ist, und zum Schließen des Steuerventils (10), wenn die Bedingung erfüllt ist.

7. Wärmepumpensystem (1) nach Anspruch 1 oder 2, wobei die Steuerung (12) konfiguriert ist, um, wenn der Heizbetrieb gestartet wird, das Steuerventil (10) zu öffnen, wenn die Bedingung zum Bewirken des gleich hohen Drucks wie oder niedrigeren Drucks als den eingestellten Druck im Niederdruckabschnitt erfasst wird, die Drehzahl des Verdichters (2) schrittweise mit einem Geschwindigkeitsinkrement, das entsprechend der Außenlufttemperatur eingestellt wird, auf eine erforderliche Drehzahl erhöht wird, um den Betrieb des Verdichters (2) mit dem voll geöffneten elektrischen Expansionsventil (5) zu starten, die Vollöffnungssteuerung des elektrischen Expansionsventils (5) aufzuheben und auf eine normale Steuerung umzuschalten, wenn die Drehzahl des Verdichters (2) eine erforderliche Drehzahl erreicht hat, und, anschließend, das Steuerventil (10) zu schließen, wenn eine im Voraus bestimmte Zeitdauer verstrichen ist.

## Revendications

1. Système de pompe à chaleur (1) comprenant :
un cycle de réfrigération en cycle fermé (9) dans lequel un compresseur (2), un échangeur de chaleur extérieur (4), une valve d'expansion électrique (5) et un échangeur de chaleur intérieur (6) sont raccordés en séquence ; et
un organe de commande (12) qui commande le cycle de réfrigération (9),
dans lequel le cycle de réfrigération (9) est rempli avec un réfrigérant HFO,
dans lequel le cycle de réfrigération (9) est prévu avec un circuit de dérivation de gaz chaud (11) qui dérive une partie d'un réfrigérant de gaz chaud vers un tuyau d'admission (8B) du compresseur (2), le circuit de dérivation de gaz chaud (11) est prévu avec une valve de commande (10) et prévu entre un tuyau d'éjection (8A) du compresseur (2) et le tuyau d'admission (8B),
**caractérisé en ce que** le circuit de dérivation de gaz chaud (11) est configuré pour dériver ladite partie dudit réfrigérant de gaz chaud à haute pression et haute température éjecté du compresseur (2) vers le tuyau d'admission (8B), afin d'augmenter la température et la pression du gaz réfrigérant basse pression qui doit être pris dans le compresseur,
et **en ce que** l'organe de commande (12) a une fonction pour, lors du commencement de l'opération de chauffage, ouvrir la valve de commande (10) lorsqu'une pression dans une section à basse pression est détectée comme étant égale ou inférieure à une pression de consigne ou lorsqu'une condition pour rendre la pression égale ou inférieure à la pression de consigne est détectée, et l'organe de commande (12) a une fonction pour fermer la valve de commande (10) lorsque la pression dans la section basse pression est détectée pour être stabilisée à une pression égale ou supérieure à la pression de consigne.

2. Système de pompe à chaleur (1) selon la revendication 1, dans lequel un accumulateur (7) est prévu dans le tuyau d'admission (8B) du cycle de réfrigération (9) et le circuit de dérivation de gaz chaud (11) est raccordé au tuyau d'admission (8B) entre l'accumulateur (7) et le compresseur (2).

3. Système de pompe à chaleur (1) selon la revendication 1 ou 2, dans lequel l'organe de commande (12) est configuré pour estimer qu'une condition d'ouverture de valve pour la valve de commande (10) est satisfaite et ouvrir la valve de commande (10) lorsque la pression dans la section à basse pression du cycle de réfrigération (9) est égale ou inférieure à la pression de consigne, lorsqu'une température d'air extérieur est égale ou inférieure à une température de consigne, ou bien lorsqu'une différence entre une température de réfrigérant éjecté et la température d'air extérieur est égale ou inférieure à une température de consigne.

4. Système de pompe à chaleur (1) selon l'une quelconque des revendications 1 à 3, dans lequel l'organe de commande (12) est configuré pour fermer la valve de commande (10) lorsqu'un état dans lequel la section à basse pression satisfait une condition de stabilisation et un état dans lequel le compression (2) a atteint une vitesse de rotation prédéterminée, sont détectés.

5. Système de pompe à chaleur (1) selon la revendication 4, dans lequel l'organe de commande (12) est configuré pour estimer la stabilisation de la section à basse pression selon si un état dans lequel la section à basse pression est égale ou supérieure à la pression de consigne, continue ou pas pendant une quantité de temps prédéterminée ou si un état dans lequel une différence de température entre la température d'air extérieur et une température d'échangeur de chaleur externe est égale ou inférieure à une valeur de consigne et dans lequel une différence de température entre la température d'éjection du compression (2) et une température d'échangeur de chaleur intérieur est égale ou supérieure à une valeur de consigne, continue ou pas pendant une quantité de temps prédéterminée.

6. Système de pompe à chaleur (1) selon l'une quelconque des revendications 1 à 5, dans lequel l'organe de commande (12) est configuré pour estimer si un temps d'interdiction de dégivrage s'est écoulé ou pas après l'ouverture de la valve de commande (10), fermer la valve de commande (10) si le temps d'interdiction de dégivrage s'est écoulé, estimer si une condition pour fermer la valve de commande (10) est satisfaite ou pas si le temps d'interdiction de dégivrage ne s'est pas écoulé, et fermer la valve de commande (10) si la condition est satisfaite.

7. Système de pompe à chaleur (1) selon la revendication 1 ou 2, dans lequel l'organe de commande (12) est configuré de sorte que, lors du commencement de l'opération de chauffage, la valve de commande (10) est ouverte lorsque la condition pour établir la pression dans la section à basse pression est égale ou inférieure à la pression de consigne est détectée, la vitesse de rotation du compresseur (2) est augmentée par palier avec un incrément de vitesse, qui est déterminé selon la température d'air extérieur, à une vitesse de rotation requise, le fonctionnement du compresseur (2) est démarré avec la valve d'expansion électrique (5) complètement ouverte, la commande complètement ouverte de la valve d'expansion électrique (5) est annulée et commutée sur une commande normale lorsque la vitesse de rotation du compresseur (2) a atteint une vitesse de rotation requise, et ensuite, la valve de commande (10) est fermée lorsqu'une quantité de temps prédéterminée s'est écoulée.
